# EUROPEAN PATENT APPLICATION

(11) **EP 2 230 464 A1**
(43) Date of publication of application: **22.09.2010**
(21) Application number: 08868101.0
(22) Date of filing: 16.12.2008
(51) Int. Cl.: F24C 7/02

(54) **COOKING DEVICE**

(30) Priority: 27.12.2007 JP 2007337593
(71) Applicant: Panasonic Corporation, Kadoma-shi Osaka 571-8501 (JP)
(72) Inventor: UCHIYAMA, Satomi, Chuo-ku, Osaka 540-6207 (JP); TAKAYAMA Fumiko, Chuo-ku, Osaka 540-6207 (JP); ZOUGOU Kayoko, Chuo-ku, Osaka 540-6207 (JP)
(74) Representative: Grünecker, Kinkeldey, Stockmair & Schwanhäusser Anwaltssozietät
(86) International application number: PCT/JP2008/003795
(87) International publication number: WO 2009/084169

(57) **Abstract**

To provide a cooker capable of shortening a heating treatment time by high-frequency waves at a lower portion of a heating chamber which is divided by a heating plate.

A first object to be heated 12a placed on a placing table 12c on a bottom surface of a heating chamber 11 can be cooked by a lower heat source including a high-frequency heat source 21 based on cooking information input though a operation unit 23 under control through a control unit 24. Simultaneously, a second object to be heated 12b placed on a heating plate 30 which divides the heating chamber 11 into upper and lower sections can be cooked by an upper heat source 20. At this time, since high-frequency waves supplied from the high-frequency heat source 21 are reflected by a reflecting portion 31 provided on the lower side of the heating plate 30 so as to be radiated on the first object to be heated 12a, the first object to be heated 12a can be cooked with good efficiency, thereby making it possible to shorten the cooking time.

## Description

### Technical Field

The present invention relates to a cooker which heats an object to be heated by dielectric heating.

### Background Art

Microwave ovens as typical microwave heating devices can heat directly food which is an object to be heated. Accordingly, the microwave ovens are an indispensable device of line for cooking due to conveniences of not needing to prepare pans and pots. In a popular one of the microwave ovens, a size of a space for accommodating the food in a heating chamber in which microwaves are propagated has width and depth dimensions of about 300 to 400 mm and a height dimension of about 200 mm.

In recent years, there are practically used microwave ovens having a horizontally wider heating chamber configuration which includes a flat bottom surface of the space for accommodating the food and has an increased width dimension of 400 mm or more relatively larger than the depth dimension, thereby improving conveniences in placing and heating a plurality of dishes in the heating chamber.

In addition, with an increase of functions to microwave ovens, microwave ovens have been introduced to marketplaces which have a "grilling function" in addition to the conventionally available so-called "heating function" (a high-frequency heating in which food is subjected to a microwave radiation so as to heat the food). The grilling function includes a method for heating a heating plate on which food is placed thereby heating the food via the heating plate, a method for heating food by a heater, or a function to cook food by a direct fired type (to provide the finish of the cooked food such that the outside is crispy while the inside is juicy) by combination of these methods.

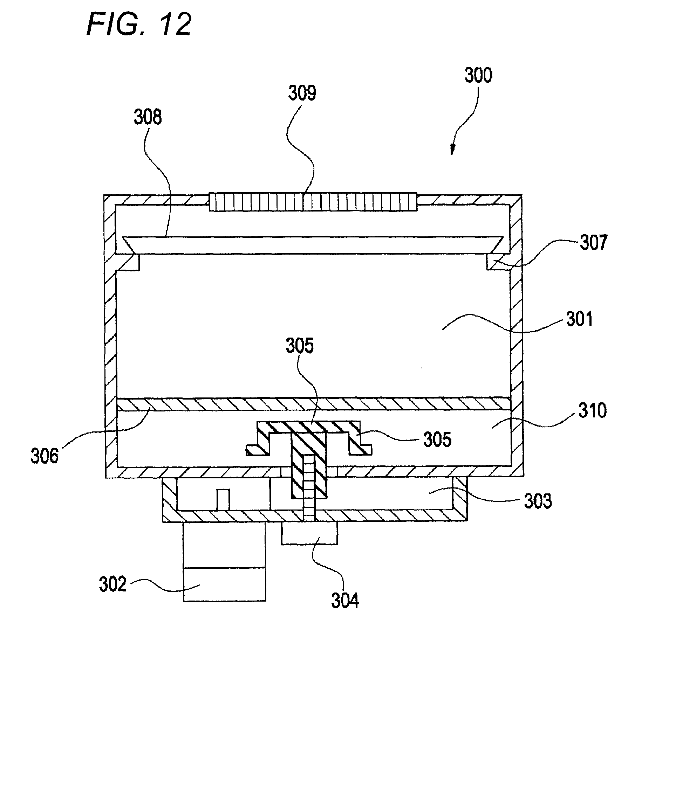

As shown in Fig. 12 illustrating a block diagram of a conventional high-frequency heating device, conventionally, this type of high-frequency heating device 300 includes: a wave guide 303 for transmitting microwaves radiated from a magnetron 300 serving as a typical microwave generating means; a heating chamber 301; a placing table 306 which is fixed in the heating chamber 301 for placing food (not shown) serving as a typical object to be heated and which has a property of easily transmitting microwaves therethrough since the placing table 306 is made of a low-loss dielectric material such as ceramics or glass; an antenna space 310 which is defined below the placing table 306 within the heating chamber 301; a rotating antenna 305 which is mounted in a vicinity of a center position of the heating chamber 301 and extends from the wave guide 303 to the antenna space 310 so as to radiate microwaves in the wave guide 303 into the heating chamber 301; a motor 304 serving as a typical driving means for rotationally driving the rotating antenna 305; a heating plate 308 which is installed in the heating chamber 301 depending on the applications; a plate receiving portion 307 for supporting the heating plate 308; and a heater 309 for electric heating.

When the heating function is selected to heat directly the object to be heated by high-frequency heating, a high-frequency heating operation is executed in a state where food etc. is placed on the placing table 306. Microwaves radiated from the magnetron 302 are transmitted to the rotating antenna 305 via the wave guide 303, and then the microwaves are radiated towards the heating chamber 301 from a radiating portion of the rotating aerial 305. At this time, generally, the rotating antenna 305 radiates microwaves while rotating at a constant speed so as to agitate the microwaves uniformly within the heating chamber 301.

When the grill function of a direct fired type is selected, food (for example, a leg of chicken, fish, etc.) is placed on the heating plate 308 placed on the plate receiving portion 307. In this state, a heating treatment for a front surface of the food is performed by the heater 309 positioned above the food. On the other hand, a heating treatment for a rear surface of the food is performed by the heating plate 308 which is heated to high temperatures by microwaves.

In the cooking by concentrating microwaves on the food, water in an interior of the food is evaporated excessively due to the nature of microwaves. On the contrary, in the process for heating the food by the heater and the heating plate, the food can be finished as the direct fired type such that the surface of the food is crispy while moisture and relish is sealed inside the food (see Patent Document 1).

Patent Document 1: JP-A-2004-71216 (pages 5 to 7, Fig. 1).

### Disclosure of Invention

### Technical Problem

In the conventional cooker described above, a heating treatment by high-frequency waves performed at the lower portion of the heating chamber 301 which is divided by the heating plate 308 provided in the heating chamber 301. It is further desired to shorten the high-frequency heating treatment time so as to shorten the cooking time.

The invention has been made for solving the problem in the related art, and an object thereof is to provide a cooker which can shorten a heating treatment time using high-frequency waves at a lower portion of a heating chamber which is divided by a heating plate.

### Technical Solution

According to the invention, there is provided a cooker including: a heating chamber having a bottom surface on which a first object to be heated is placed; a heating plate which is detachably provided in the heating chamber and which has an upper surface on which a second object to be heated is placed; an upper heat source provided on an upper side of the heating chamber, and a lower heat source provided on a lower side of the heating chamber and including at least a high-frequency heat source; an operation unit configured to receive an input of information on a heating treatment for the first and second objects to be heated; a control unit configured to individually control the upper heat source and the lower heat source, based on the information on the heating treatment which is input through the operation unit; and a reflecting portion provided below the heating plate and configured to reflect leftwards and rightwards high-frequency waves supplied from the high-frequency heat source.

By this configuration, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the high-frequency waves supplied from the high-frequency heat source are reflected by the reflecting portion provided below the heating plate and then are radiated on the first object to be heated. Therefore, the first object to be heated can be cooked with good efficiency, whereby the cooking time can be shortened.

Additionally, according to the invention, there is provided a cooker comprising a heating chamber having a bottom surface on which a first object to be heated is placed; a heating plate which is detachably provided in the heating chamber and which has an upper surface on which a second object to be heated is placed; a heat source configured to heat the heating chamber; an operation unit configured to receive an input of information on a heating treatment for the first and second objects to be heated; and a control unit configured to control the heat source based on the information on the heating treatment which is input through the operation unit, wherein the control unit performs a control so that a temperature on an upper side of the heating plate in the heating chamber is higher than a temperature on a lower side of the heating plate, and wherein a reflecting portion is provided below the heating plate for reflecting leftwards and rightwards high-frequency waves supplied from the high-frequency heat source.

By this configuration, the first object to be heated placed on a placing table at the bottom surface of the heating chamber can be cooked based on the cooking information input through the operation unit by the control of the control unit. Simultaneously, the second object to be heated placed on the heating plate which divides the heating chamber into two upper and lower sections can be cooked. At this time, the second object to be heated is cooked by controlling the temperature on the upper side of the heating plate to be higher than that on the lower side thereof. In addition, the high-frequency waves supplied from the high-frequency heat source are reflected by the reflecting portion provided below the heating plate, thereby being radiated on the first object to be heated. Therefore, the first and second objects to be heated can be cooked with good efficiency, whereby the cooking time can be shortened.

In addition, in the cooker of the invention, a V-groove is formed on the reflecting portion which extends along a front-rear direction of the heating chamber.

By this configuration, high-frequency waves radiated on the heating plate from therebelow strike a sloping surface of the V-groove formed on the reflecting portion, thereby being dispersed leftwards and rightwards. Accordingly, the high-frequency waves can be radiated on the first object to be heated uniformly, whereby the first object to be heated can be cooked with good efficiency.

In addition, in the cooker of the invention, the reflecting portion defines a curved surface which protrudes convexly downwards.

By this configuration, the high-frequency waves radiated on the heating plate from therebelow strike the curved surface of the reflecting portion and are dispersed leftwards and rightwards. Consequently, the high-frequency waves can be radiated on the first object to be heated uniformly, whereby the first object to be heated can be cooked with good efficiency.

In addition, the cooker of the invention further includes a steaming heat source configured to supply steam to at least one of the upper and lower sides of the heating plate in the heating chamber.

By this configuration, at least one of the first object to be heated and the second object to be heated can be steam heated, whereby the object to be heated can be heated in a state where the surface of the object to be heated is moisturized.

Further, the cooker of the invention includes a temperature detection means for detecting a temperature of the object to be heated, wherein in a case of a single-item cooking in which one of the first object to be heated and the second object to be heated is cooked, the control unit controls the heat source based on the temperature detected by the temperature detection means, and wherein in the case of cooking the first object to be heated and the second object to be heated, the control unit controls the heat source based on time.

By this configuration, in the case of the single-item cooking, the heat source is controlled based on the temperature detected by the temperature detection means, while in the case of cooking the first and second objects to be heated, the heat source is controlled based on time, whereby the efficient cooking can be performed.

In addition, the cooker of the invention includes a heating element configured to generate heat by absorbing high-frequency waves which is provided at a part of a reflecting portion of the heating plate.

By this configuration, since the heating plate is heated by absorbing a part of high-frequency waves, the second object to be heated placed on the heating plate can be heated from a lower side thereof, whereby the second object to be heated can be cooked with good efficiency.

Additionally, the cooker of the invention includes an optical heater provided at a part of the heat source.

By this configuration, a strong heating capability can be obtained within a short length of time for efficient cooking by use of the optical heater.

Further, in the cooker of the invention, the optical heater is a steam transmissive heater.

By this configuration, since the optical heater can be used while using a steaming heat source, the object to be heated can be heated quickly and in a state where the surface of the object to be heated is moisturized.

### Advantageous Effects

In the present invention, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the high-frequency waves supplied from the high-frequency heat source are reflected by the reflecting portion provided below the heating plate and then are radiated on the first object to be heated. Therefore, the present invention can provide a cooker having advantages that the first object to be heated can be cooked with good efficiency, whereby the cooking time can be shortened.

### Brief Description of the Drawings

Fig. 1 is a schematic perspective view of a cooker according to a first embodiment of the invention.
Fig. 2 is a sectional view resulting from cutting the cooker in a left-right direction.
Fig. 3 is a sectional view resulting from cutting the cooker of the embodiment of the invention in a front-rear direction.
Fig. 4 is a sectional view showing a state in which temperatures within a heating chamber are detected by a temperature detection means.
Fig. 5 is a sectional view of the temperature detection means.
Fig. 6 is a plan view showing a detection range by the temperature detection means.
Fig. 7 is a perspective view of a heating plate.
Fig. 8 is a sectional view of the heating plate for indicating a reflecting portion.
Fig. 9 is a sectional view of the heating plate for indicating a heating element.
Fig. 10 is a sectional view of the heating plate for indicating a reflecting portion of another example.
Fig. 11 is a sectional view of the heating plate for indicating a heating element of another example.
Fig. 12 is a block diagram of a conventional high-frequency heating device.

### Explanation of Reference

- 10: cooker
- 11: heating chamber
- 11c: bottom surface
- 12a: first object to be heated
- 12b: second object to be heated
- 20: infrared ray generating means (upper heat source)
- 20a: argon heater (optical heater)
- 20b: Miraclon heater (optical heater)
- 21: high-frequency heat source (lower heat source)
- 22: steaming heat source
- 23: operation unit
- 24: control unit
- 30: heating plate
- 30a: upper surface
- 31: reflecting portion
- 31a: V groove
- 31 b: curved surface
- 34: heating element
- 50: temperature detection means

### Best Mode for Carrying out the Invention

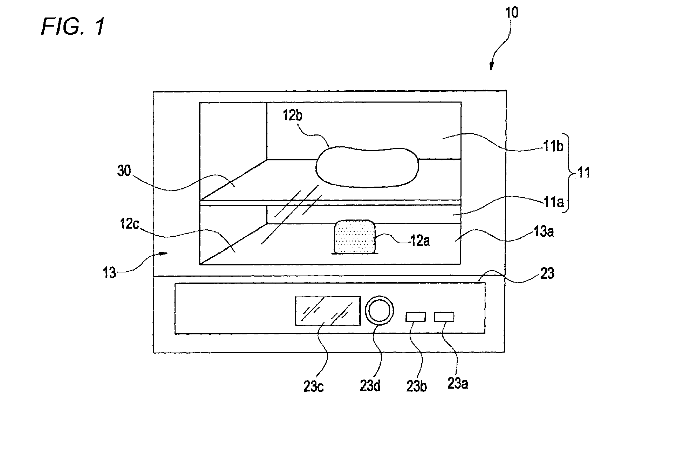

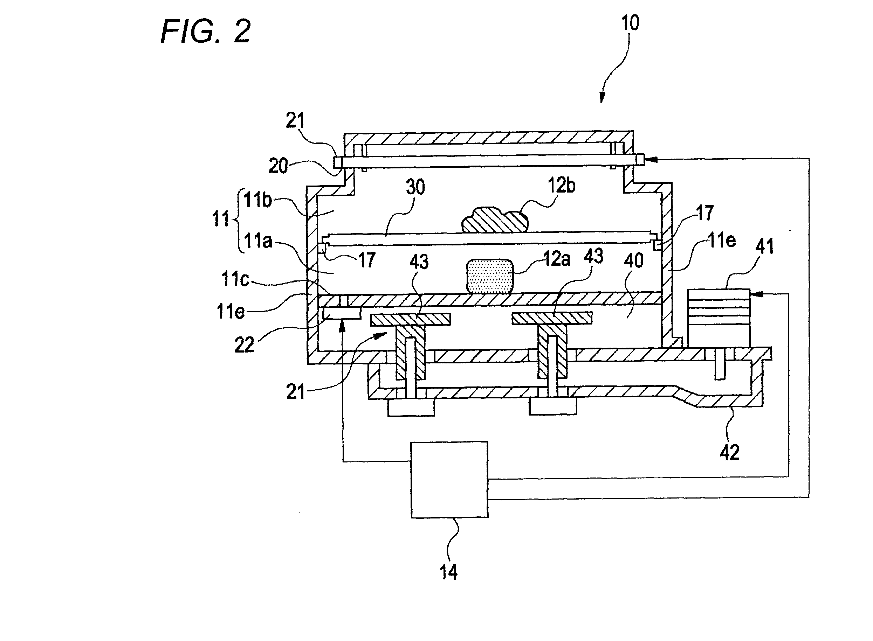

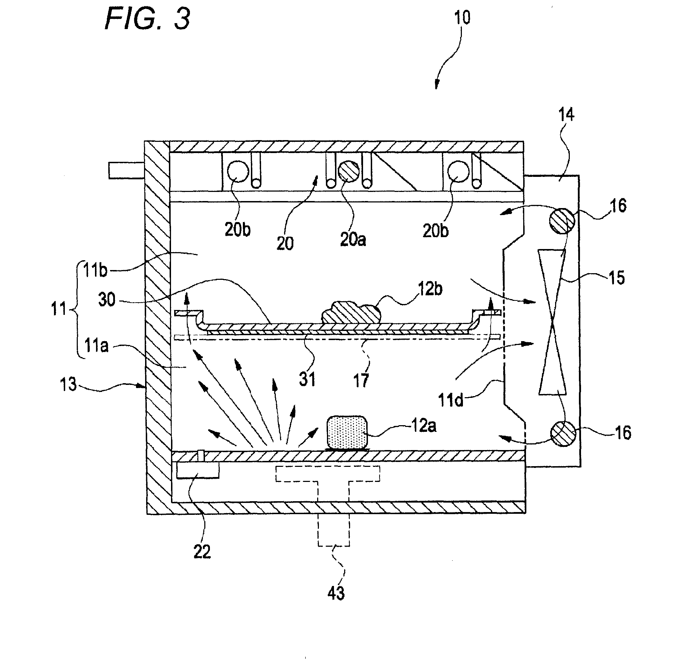

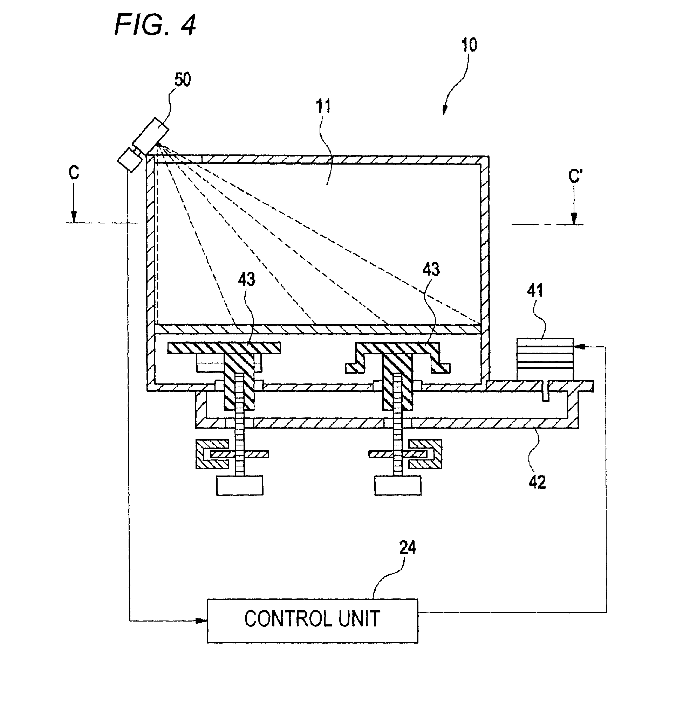

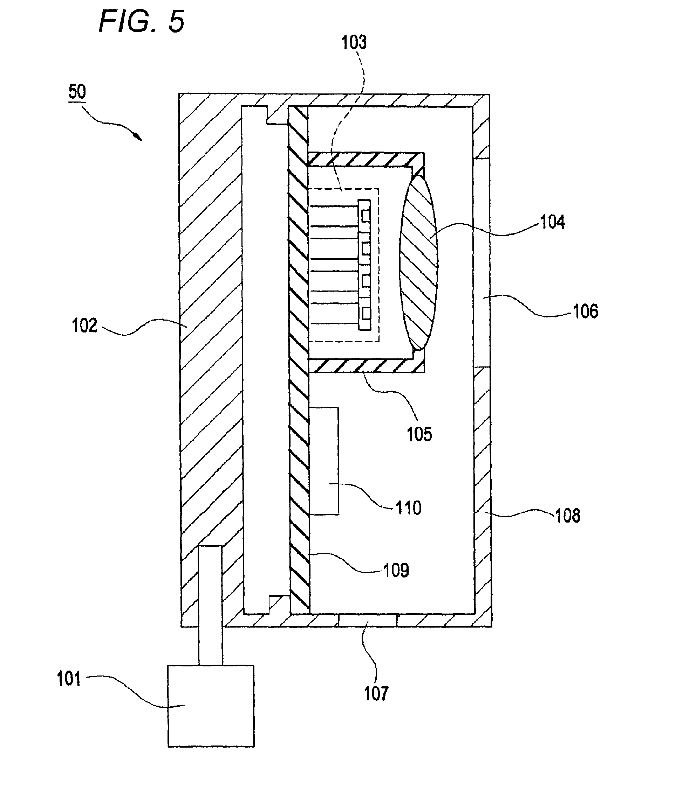

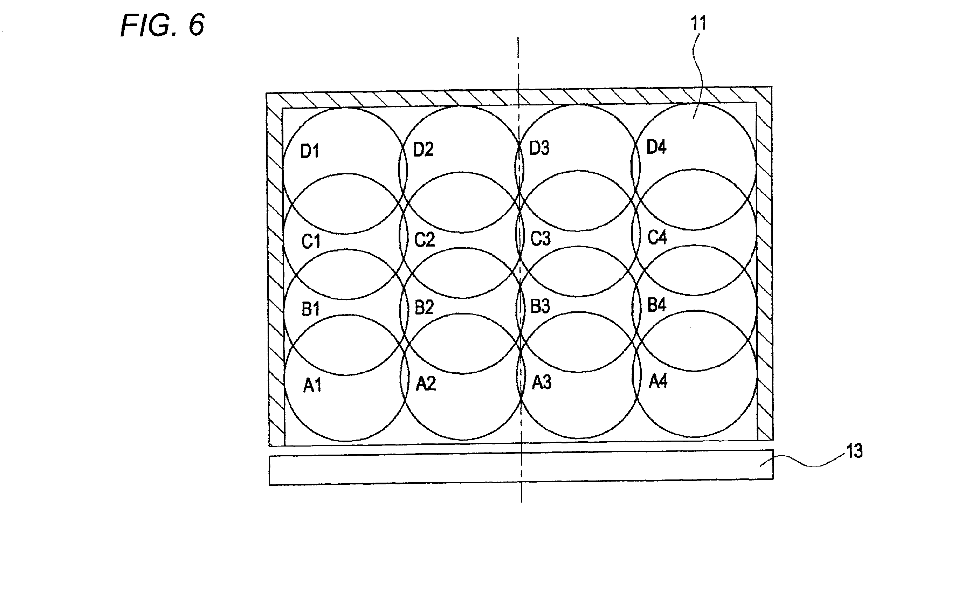

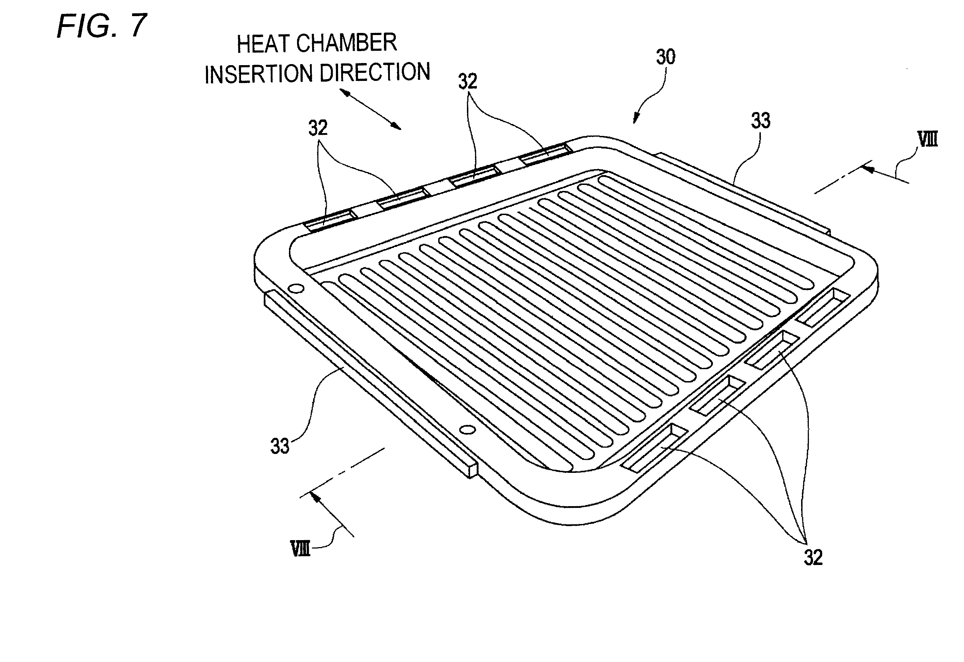

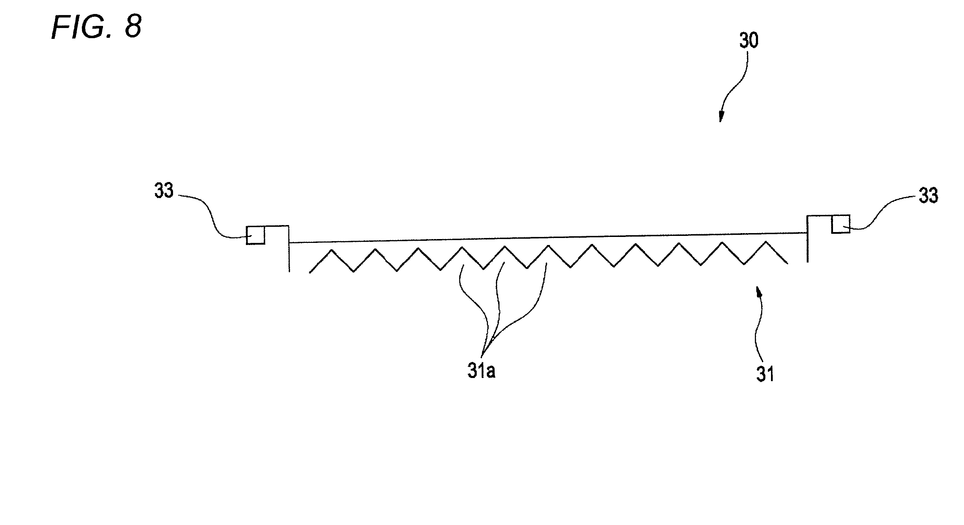

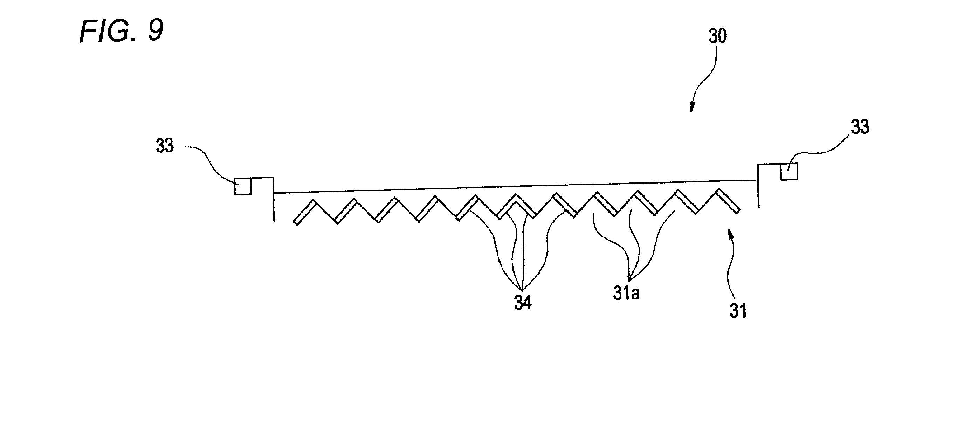

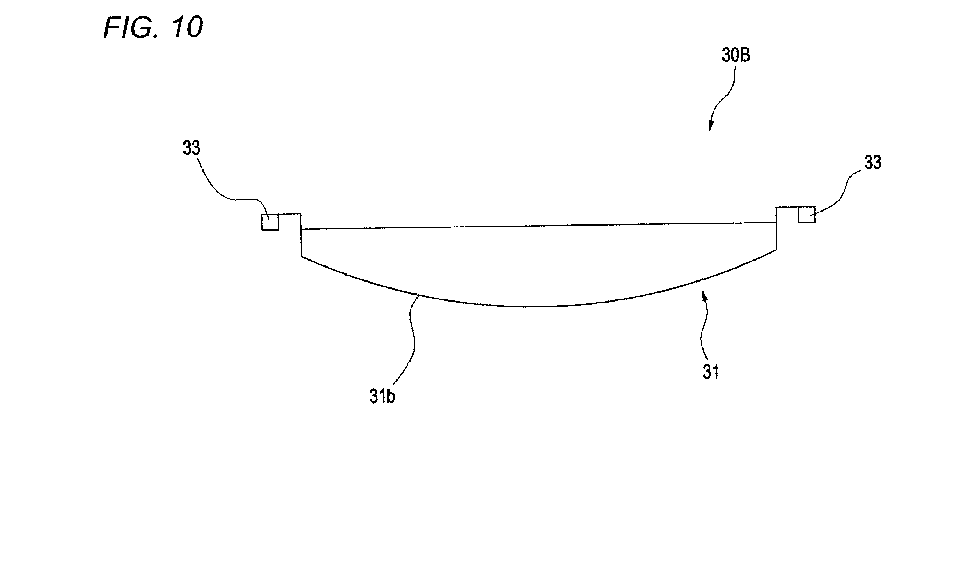

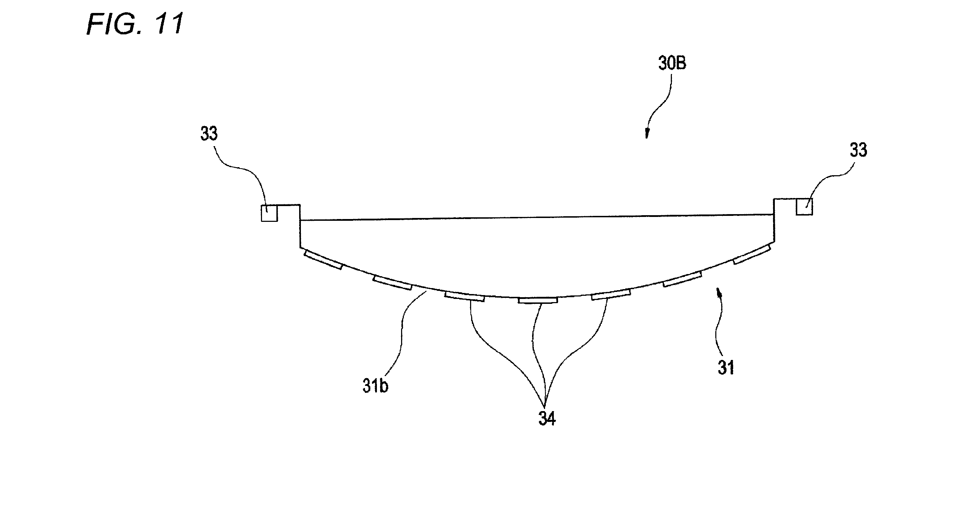

A cooker according to an embodiment of the invention will be described below with reference to drawings. Fig. 1 is a schematic perspective view of a cooker according to a first embodiment of the invention, Fig. 2 is a sectional view resulting from cutting the cooker in a left-right direction (a left-right direction when viewed toward a front of the cooker), Fig. 3 is a sectional view resulting from cutting the cooker of the embodiment of the invention in a front-rear direction (a front-rear direction when viewed toward a front of the cooker), Fig. 4 is a sectional view showing a state in which temperatures within a heating chamber are detected by a temperature detection means, Fig. 5 is a sectional view of the temperature detection means, Fig. 6 is a plan view showing a detection range by the temperature detection means, Fig. 7 is a perspective view of a heating plate, Fig. 8 is a sectional view of the heating plate for indicating a reflecting portion, Fig. 9 is a sectional view of the heating plate for indicating a heating element, Fig. 10 is a sectional view of the heating plate for indicating a reflecting portion of another example, and Fig. 11 is a sectional view of the heating plate for indicating a heating element of another example.

As shown in Figs. 1 and 2, a cooker of the invention includes a heating chamber 11 having a bottom surface 12c on which a first object to be heated 12a is placed, and a heating plate 30 having an upper surface 30a on which a second object to be heated 12b is placed is detachably provided in the heating chamber 11. Consequently, the heating chamber 11 is divided into a lower heating chamber 11a and an upper heating chamber 11b by the heating plate 30. In addition, the cooker includes: an upper heat source (20) provided on an upper side of the heating chamber 11; a lower heat source (21) which is provided on a lower side of the heating chamber 11 and which has at least a high-frequency heat source 21; an operation unit 23 configured to receive an input of information on a heating treatment for the first and second objects to be heated 12a, 12b; and a control unit 24 configured to individually control the upper heat source (20) and the lower heat source (21), based on the information on the heating treatment which is input through the operation unit 23.

A door 13 is provided at a front opening of the heating chamber 11 which opens and closes so as to seal the heating chamber 11. The door 13 includes a transparent window 13a through which an interior of the heating chamber 11 can be visualized. An operation panel 23 is provided, for example, below the door 13, and includes a starter switch 23a for instructing a start of heating, a cancellation switch 23b for instructing an end of heating, a display portion 23c, and a dial knob 23d for selecting cooking programs which are prepared in advance or for enabling a manual operation. In this way, the operation panel 23 is provided in a position which facilitates the visualization of the interior of the heating chamber 11, whereby the switch or the dial knob can easily be operated while verifying the interior of the heating chamber 11 and displayed contents on the display portion 23c.

As shown in Figs. 2 and 3, for example, an infrared ray generating means 20 serving as a steam transmissive optical heater can be used as the upper heat source (20) which is provided at the upper side of the heating chamber 11. As the infrared ray generating means 20, three heaters containing, for example, an argon heater 20b provided at the center of a ceiling surface and Miraclon heaters 20b provided on front and rear sides of the argon heater 20a, respectively. The infrared ray generating means 20 and the high-frequency heat source 21 are controlled by the control unit 24 so that the argon heater 20a and the Miraclon heaters 20b radiate infrared rays of a wavelength which is difficult to be absorbed by vapors so as to allow the infrared rays to pass through vapors. Accordingly, the infrared rays are applied to the second object to be heated 12b (or to the first object to be heated 12a when the heating plate 30 is not provided) for cooking.

The argon heater 20a includes a tungsten wire as a core wire, and argon gas is sealed in a transparent tubular member. This argon heater 20a has characteristics that it is activated quicker than the Miraclon heaters 20b.

Although the Miraclon heaters 20b have conventionally been in use, the Miraclon heaters 20b generate a wavelength which is longer than that of the argon heater 20a and are activated quicker than a mica heater. Therefore, the Miraclon heaters 20b are suitable for browning surfaces of the first and second objects to be heated 12a, 12b. In addition, the Miraclon heaters 20b are characterized by a low cost.

Here, when the Miraclon heaters 20b is used for a microwave oven, the Miraclon heaters 20b may absorb microwaves and may be heated, whereby a glass material used may be melted. Therefore, it is preferable to use a Miraclon heater 20b in the form of a white tube which has a relatively low dielectric constant and which has difficulty in absorbing microwaves.

Accordingly, a strong heating capability can be obtained within a short length of time and an efficient cooking can be implemented. As used herein, the argon heater 20a and the Miraclon heaters 20b are also referred to as tubular heaters (20) as a common term thereof, if any.

As shown in Figs. 2 and 3, at least the high-frequency heat source 21 is used as the lower heat source which is provided at the lower side of the heating chamber 11. In other words, a heat source in addition to the high-frequency heat source 21 may be provided. The high-frequency heat source 21 includes a magnetron 21 serving as a high-frequency generating means, and there are provided a wave guide 42 configured to guide high-frequency waves generated from the magnetron 21 into the heating chamber 11 and rotating antennas 43 configured to radiate radio waves to the heating chamber 11. The rotating antennas 43 are configured to have radiation directivity. The cooker 10 of the embodiment is configured to control at least a portion of the rotating antennas 43 which has high radiation directivity in a predetermined orientation, so as to more concentrate and radiate microwaves in a specific direction. Arrows shown in Fig. 3 as extending from the bottom surface 12c towards the direction of a ceiling of the heating chamber 11 represent microwaves radiated from the rotating antenna 43. The orientations of the arrows indicate directions in which microwaves are radiated, and the lengths thereof indicate intensities thereof. Fig. 3 shows a case in which microwaves are radiated strongly to the vicinity of a peripheral portion of the heating plate.

Additionally, as shown in Fig. 3, the cooker 10 includes a communication passage 14, a circulation fan 15 and heaters 16 at the rear of a partition board 11d which lies on a far side of the heating chamber 11. Air inside the heating chamber 11 is sucked by the circulation fan 15 and heated by the heaters 16 (flows of the sucked air in by the circulation fan 15 in Fig. 3 are indicated by arrows directed from the heating chamber 11 towards the circulation fan 15). Then, the heated air can be sent out into the heating chamber 11 from outlet holes provided in the partition board 11d (flows of heated air are indicated by arrows directed from the heaters 16 towards the heating chamber 11 indicate).

In addition, the cooker 10 of the invention preferably further includes a steaming heat source 22 so as to supply steam to at least one of the upper and lower heating chambers 11b, 11a which are defined on the upper and lower sides of the heating plate 30 in the heating chamber 11.

That is, as shown in Figs. 2 and 3, the steam generating means 22 is provided at the lower side of the heating chamber 11, so as to supply steam into the heating chamber 11. Since steam is supplied continuously into the heating chamber 11 to circulate therein, the vapor density in an area contiguous to the first object to be heated 12a does not become zero, which can prevent the excessive browning on the surface of the first object to be heated 12a. In addition, since steam also circulates to the upper heating chamber 11b defined by the heating plate 30, an increase in temperature at an interior portion of the second object to be heated 12b is promoted, which can prevent the excessive browning on the surface of the second object to be heated 12b placed on the heating plate 30, while a center portion of the second object to be heated 12b does not remain uncooked. Additionally, since appropriate moisture is given to the surface of the second object to be heated 12b, the surface thereof is encompassed by steam. Therefore, the water in the interior portion of the second object to be heated 12b is not likely to escape therefrom. Thus, the second object to be heated 12b can be cooked so that the surface is grilled crispy while juices are kept in the interior portion.

In this way, by using the infrared ray generating means 20 as the optical heater and using the infrared ray generating means 20 as the steam transmissive heater, the optical heaters can be used while using the steaming heat source 22. Therefore, the object to be heated can be heated quickly in a state where the surface of the object to be heated 12b is moisturized.

Further, as shown in Fig. 4, the cooker 10 of the invention includes a temperature detection means 50 for detecting temperatures of the objects to be heated 12a, 12b. In the case of a single-item cooking in which either the first object to be heated 12a or the second object to be heated 12b is cooked, the control unit 24 preferably controls the heat sources 20, 21, 22 based on the temperatures detected by the temperature detection means 50. When the first object to be heated 12a and the second object to be heated 12b are cooked, the control unit 24 preferably controls (refer to Fig. 2) the heat sources 20, 21, 22 based on time.

As shown in Fig. 5, the temperature detection means 50 includes a plurality of infrared detectors 103 which are provided on a substrate 109 so as to be aligned in a row, a case 108 which accommodates the whole of the substrate 109, and a stepper motor 101 for moving the case 108 in a direction perpendicular to a direction in which the infrared detectors 103 are arranged.

A metallic can 105 which seals the infrared detectors 103 therein and an electronic circuit 110 for processing operations of the infrared detectors are provided on the substrate 109. In addition, the can 105 is provided with a lens 104 through which infrared rays pass. Additionally, an infrared pass hole 106 which enables infrared rays to pass therethrough and a hole 107 through which enables lead wires from the electronic circuit 110 to pass therethrough are provided in the case 108.

The rotation motion of the stepper motor 101 can move the case 108 in a direction perpendicular to the direction in which the infrared detectors 103 are arranged in a line.

Fig. 6 is a drawing explaining infrared temperature detection spots on a sectional plane taken along the line C-C' in Fig. 4. As shown in Fig. 6, the cooker 10 of the embodiment can detect temperature distributions in almost all areas within the heating chamber 11, in association with the reciprocating rotary motions of the stepper motor 101.

Specifically, for example, firstly, the temperature detection elements 103 (for example, infrared sensors) of the temperature detection means detect simultaneously a temperature distribution in areas A1 to A4 in Fig. 6. Next, when the stepper motor 101 rotates to move the case 108, the temperature detection elements 103 detect a temperature distribution in areas B1 to B4. Further, the stepper motor 101 rotates to move the case 108, and the temperature detection elements 101 detect a temperature distribution in areas C1 to C4. Similarly, a temperature distribution in areas D1 to D4 is detected.

Following the above-described operations, when the stepper motor 101 rotates reversely, temperature distributions are detected in the reverse order of the areas D1 to D4, the areas C1 to C4, the areas B1 to B4, and the areas A1 to A4. By repeating the above-described operations, the temperature distribution detection means can detect a temperature distribution of the whole of the interior of the heating chamber 11.

By this configuration, when the single-item cooking is performed, the heat sources 20, 21, 22 are controlled based on the temperatures detected by the temperature detection means 50. When the first and second objects to be heated 12a, 12b are cooked, the heat sources 20, 21, 22 are controlled based on time. Thus, an efficient cooking can be implemented.

As shown in Fig. 2, locking portions 17 are provided on opposing side walls 11e, 11f of the heating chamber 11. The heating plate 30 is supported on the locking portions 17 so as to divide the heating chamber 11 into the upper and lower heating chambers 11b, 11a and also to allow the second object to be heated 12b to be placed thereon.

As shown in Fig. 7, the heating plate 30 has a rectangular plate-like shape as a whole and includes resin handles 33 which are provided on both left-and right sides thereof, whereby the heating plate 30 can be pulled out of and installed into the heating chamber 11 in the front-rear direction along the locking portions 17 of the heating chamber 11. Communication holes 32 are provided in a peripheral portion of the heating plate 30 so as to establish communications between the upper and lower heating chambers divided by the heating plate 30 within the heating chamber 11. Accordingly, steam is generated in the lower portion of the heating chamber 11 which is divided by the heating plate 30, and the generated steam is guided into the upper heating chamber 11b through the communication holes 32 provided in the peripheral portion of the heating plate 30, whereby the second object to be heated 12b placed on the heating plate 30 is cooked. Fig. 3 shows arrows directed from the lower space defined by the heating plate 30 towards the upper space defined by the heating plate 30 by passing through the peripheral portion of the heating plate 30. These arrows indicate flows of steam directed towards the upper space.

As shown in Fig. 8, a reflecting portion 31 is provided on a lower side of the heating plate 30 (in this embodiment, on a lower surface of the heating plate 30) which reflects leftwards and rightwards high-frequency waves supplied from the high-frequency heat supply 21. The reflecting portion 31 can be configured by forming, for example, a plurality of V grooves 31 a which extend along a front-rear direction of the heating chamber 11 (a direction perpendicular to a surface of a sheet of paper on which Fig. 8 is drawn). Note that although the V grooves 31 a can be formed integrally with the heating plate 30, a separate member having V grooves 31 a can be attached to the lower surface of the heating plate 30.

By providing the reflecting portion 31 on the lower side of the heating plate 30 as described above, high-frequency waves radiated on the heating plate 30 from therebelow strike sloping surfaces of the V grooves 31 a on the reflecting portion 31, thereby being dispersed leftwards and rightwards. Accordingly, the high-frequency waves can be radiated on the first object to be heated 12a uniformly, whereby cook the first object to be heated 12a can be cooked with good efficiency.

In addition, as shown in Fig. 9, it is preferable to provide heating elements 34 on a part of the reflecting portion 31 on the heating plate 30. The heating elements 34 are made, for example, a ferrite rubber, and generate heat by absorbing high-frequency waves. The heating elements 34 can be provided, for example, on surfaces which reflect high-frequency waves towards a center of the lower heating chamber 11a. Consequently, high-frequency waves that strike the heating plate 30 are made to be reflected leftwards and rightwards. In addition, by making the lower surface of the heating plate 30 contacting the heating elements 34 remain unpainted, the thermal conductivity is increased, thereby making it possible to shorten the cooking time.

By this, since the heating elements 34 absorb a part of high-frequency waves so as to heat the heating plate 30, the second object to be heated 12b placed on the heating plate 30 can be heated from a lower side thereof, thereby making it possible to cook the second object to be heated 12b with good efficiency.

In addition, as with a heating plate 30B shown in Fig. 10, a curved surface 31 b which protrudes convexly downwards (a cylindrical shape having a center in a front-rear direction of the heating plate 30B) can be formed as the reflecting portion 31. A circular section, an elliptic section, a parabolic section or the like can be adopted as the curved surface 31 b. The curved surface 31 b can be provided integrally with the heating plate 30B. However, the curved surface 31 b may be provided separately so as to be attached to a lower surface of the heating plate 30B.

By this, high-frequency waves radiated on the heating plate 30B from therebelow are allowed to strike the curved surface 31 b of the reflecting portion 31 to thereby be dispersed leftwards and rightwards. Accordingly, the high-frequency waves can be radiated on the first object to be heated 12a uniformly, whereby the first object to be heated 12a can be cooked with good efficiency.

In addition, as shown in Fig. 11, heating elements 34 which generate heat by absorbing high-frequency waves are preferably provided partially on the reflecting portion 31 of the heating plate 30B. For example, the heating elements 34 of a predetermined width can be provided at constant intervals in a left-right direction.

Since the heating plate 30 is heated as a result that the heating elements 34 absorbs a part of high-frequency waves, the second object to be heated 12b placed on the heating plate 30B can be heated from a lower side thereof, whereby the second object to be heated 12b can be cooked with good efficiency.

Thus, according to the cooker 10 described above, the first object to be heated 12a placed on the bottom surface 12c of the heating chamber 11 can be cooked by the lower heat source 21 including the high-frequency heat source based on the cooking information input through the operation unit 23 under control through the control unit 24. Simultaneously, the second object to be heated 12b placed on the heating plate 30 which divides the heating chamber 11 into the upper and lower heating chambers can be cooked by the upper heat source 20 at the same time. At this time, high-frequency waves supplied from the high-frequency heat source 21 are reflected by the reflecting portion 31 provided below the heating plate 30 so as to be radiated on the first object to be heated 12a. Therefore, an efficient cooking can be performed, thereby making it possible to shorten the cooking time.

Next, a second embodiment of the invention will be described. Note that the drawings used to illustrate the first embodiment are commonly used, and the repetition of similar descriptions will be omitted.
A cooker 10B according to the second embodiment includes a control unit 24 configured to perform a control so that a temperature at a heating chamber 11b in a heating chamber 11 defined on an upper side of a heating plate 30 becomes higher than a temperature at a heating chamber 11a defined on a lower side of the heating plate 30, and a reflecting portion 31 is provided below the heating plate 30 which reflects leftwards and rightwards high-frequency waves supplied from a high-frequency heat source 21.

By this configuration, a first object to be heated 12a placed on a bottom surface 12c of the heating chamber 11 is cooked based on cooking information entered from a operation unit 23 under control by the control unit 24. Simultaneously, a second object to be heated 12b placed on the heating plate 30 which divides the heating chamber 11 into two upper and lower sections can be cooked. At this time, the second object to be heated 12b is cooked by setting the temperature at the heating chamber 11b defined on the upper side of the heating plate 30 to be higher than the temperature at the heating chamber 11a defined on the lower side of the heating plate 30, and the high-frequency waves supplied from the high-frequency heat source 21 are reflected by the reflecting portion 31 provided below the heating plate 30 so as to be radiated on the first object to be heated 12a. Therefore, the first and second objects to be heated 12a, 12b can be cooked with good efficiency, thereby making it possible to shorten the cooking time and.

The cooker of the invention is not limited to the embodiments described above and hence can be modified and improved as required.

This patent application is based on Japanese Patent Application (No. 2007-337593) filed on December 27, 2007, the contents of which are to be incorporated herein by reference.

### Industrial Applicability

According to the cooker of the invention, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the high-frequency waves supplied from the high-frequency heat source are reflected by the reflecting portion provided below the heating plate and then are radiated on the first object to be heated. Therefore, the cooker of the invention has advantages that the first object to be heated can be cooked with good efficiency, whereby the cooking time can be shortened. Therefore, the invention is useful in the field related to a cooker which dielectrically heats objects to be heated.

## Claims

1. A cooker comprising:
a heating chamber having a bottom surface on which a first object to be heated is placed;
a heating plate which is detachably provided in the heating chamber and which has an upper surface on which a second object to be heated is placed;
an upper heat source provided on an upper side of the heating chamber, and a lower heat source provided on a lower side of the heating chamber and comprising at least a high-frequency heat source;
an operation unit configured to receive an input of information on a heating treatment for the first and second objects to be heated;
a control unit configured to individually control the upper heat source and the lower heat source, based on the information on the heating treatment which is input through the operation unit; and
a reflecting portion provided below the heating plate and configured to reflect leftwards and rightwards high-frequency waves supplied from the high-frequency heat source.

2. The cooker according to claim 1, wherein a V-groove is formed on the reflecting portion which extends along a front-rear direction of the heating chamber.

3. The cooker according to claim 1, wherein the reflecting portion defines a curved surface which protrudes convexly downwards.

4. The cooker according to claim 1, further comprising a steaming heat source configured to supply steam to at least one of the upper and lower sides of the heating plate in the heating chamber.

5. The cooker according to claim 1, comprising:
a temperature detection means for detecting a temperature of the object to be heated,
wherein in a case of a single-item cooking in which one of the first object to be heated and the second object to be heated is cooked, the control unit controls the heat source based on the temperature detected by the temperature detection means, and
wherein in the case of cooking the first object to be heated and the second object to be heated, the control unit controls the heat source based on time.

6. The cooker according to claim 1, comprising a heating element configured to generate heat by absorbing high-frequency waves which is provided at a part of a reflecting portion of the heating plate.

7. The cooker according to claim 1, comprising an optical heater provided at a part of the heat source.

8. The cooker according to claim 7, wherein the optical heater is a steam transmissive heater.
